# EUROPÄISCHE PATENTANMELDUNG

(11) **EP 2 161 119 A1**
(43) Veröffentlichungstag der Anmeldung: **10.03.2010**
(21) Anmeldenummer: 09010901.8
(22) Anmeldetag: 25.08.2009
(51) Int. Cl.: B30B 9/26, B30B 9/06, C02F 11/12, C22B 1/248

(54) **Schleifschlammpresse**

(30) Priorität: 26.08.2008 DE 102008039773
(71) Anmelder: Gebr. Jäcklin GmbH Maschinen- und Getriebebau, 86179 Augsburg (DE)
(72) Erfinder: Jäcklin, Jürgen, 86399 Bobingen (DE); Schneider, Helmut, 86356 Neusäss (DE)
(74) Vertreter: Manitz, Finsterwald & Partner GbR

(57) **Zusammenfassung**

Eine Schleifschlammpresse umfasst eine Aufnahme für den Schleifschlamm, eine Presseinrichtung und einen Ölauffangbehälter, wobei die Aufnahme ein mit Durchgangsöffnungen versehener Behälter ist, in den eine Pressplatte absenkbar ist.

## Beschreibung

Die vorliegende Erfindung betrifft eine Schleifschlammpresse nach dem Oberbegriff des Anspruchs 1. Derartige Pressen sind grundsätzlich bekannt und dienen dazu, den in Schleifschlämmen noch enthaltenen Kühlmittelschmierstoffanteil zu minimieren, um dadurch eine Wiederverwertung der Kühlschmierstoffe, üblicherweise Öle, zu ermöglichen.

Bei den bekannten Schleifschlammpressen wird der Schleifschlamm in eine Kolben-Zylindereinheit eingebracht und mit Hilfe eines Pressstempels verpresst. Problematisch ist hierbei, dass der Schleifschlamm extrem abrasiv ist, sodass die den Schleifschlamm pressenden Elemente innerhalb kürzester Zeit abgenutzt sind. Bei den bekannten Schleifschlammpressen ist es deshalb erforderlich, in kürzesten Intervallen regelmäßig Teile auszutauschen, was sehr kostenintensiv ist. Zudem ist die Kapazität der bekannten Schleifschlammpressen vergleichsweise gering.

Es ist deshalb die Aufgabe der Erfindung, eine Schleifschlammpresse der eingangs genannten Art derart weiterzubilden, dass bei einfacher und damit kostengünstiger Herstellung eine höhere Standzeit bei verringerten Betriebskosten und einer erhöhten Ausbeute möglich ist.

Die Lösung dieser Aufgabe erfolgt durch die Merkmale des Anspruchs 1 und insbesondere dadurch, dass die Aufnahme für den Schleifschlamm ein mit Durchgangsöffnungen versehener, oben offener Behälter ist, und dass die Presseinrichtung eine Pressplatte aufweist, die in den Behälter absenkbar ist. Dabei ist in den Behälter ein Korbeinsatz eingesetzt, der mit Durchtrittsöffnungen versehen ist.

Mit einer derartig verbesserten Schleifschlammpresse, die äußerst kostengünstig herstellbar ist, lassen sich innerhalb kürzester Zeit große Mengen an Schleifschlamm derart auspressen, dass über 70 % des in dem Schleifschlamm befindlichen Restölanteils zurückgewonnen werden können, ohne dass die Schleifschlammpresse hierbei einem nennenswerten Verschleiß unterliegt. Durch das Vorsehen des oben offenen Behälters für den Schleifschlamm können große Volumina an Schleifschlamm in einem Arbeitsgang gepresst werden. Weiterhin lässt sich der mit Durchgangsöffnung versehene Behälter aus Stahl robust herstellen. Da der Behälter insbesondere allseitig mit Durchgangsöffnungen versehen ist, kann das in dem Schleifschlamm enthaltene Restöl durch diese Durchgangsöffnungen austreten, wobei der eigentliche Schleifschlamm in dem Behälter verbleibt.

Vorteilhafte Ausführungsformen der Erfindung sind in der Beschreibung, der Zeichnung sowie den Unteransprüchen beschrieben.

Nach einer ersten vorteilhaften Ausführungsform kann der Behälter an seiner Wandung eine Vielzahl von Durchgangsöffnungen aufweisen. Auf diese Weise kann das auszupressende Öl allseitig aus dem Behälter austreten. Auch kann es vorteilhaft sein, wenn der Behälter zusätzlich oder alternativ an seinem Boden eine Vielzahl von Durchgangsöffnungen aufweist, da hierdurch die Abfuhr des ausgepressten Öls begünstigt wird.

Die Durchgangsöffnungen, die in dem Behälter vorgesehen sind, können einen Durchmesser von etwa 4 bis 8 mm, insbesondere von etwa 5 bis 7 mm aufweisen, wodurch sich gute Ergebnisse erzielen ließen.

In den Behälter ist ein Korbeinsatz eingesetzt, der mit Durchtrittsöffnungen versehen ist. Auf diese Weise lässt sich nach dem Auspressen der verbliebene Schleifschlamm einerseits einfach aus dem Behälter entnehmen, indem der Korbeinsatz aus dem Behälter entfernt wird. Andererseits erfolgt eine zweifache Filterung, das heißt eventuelle Schlammpartikel, die durch die Durchtrittsöffnungen des Korbeinsatzes ausgetreten sind, verbleiben dennoch in dem Behälter. Begünstigt wird dies bei einer Ausführungsform, bei der die Durchgangsöffnungen in dem Behälter einen kleineren Querschnitt als Durchtrittsöffnungen in dem Korbeinsatz aufweisen. Bei einer vorteilhaften Ausführungsform weisen die Durchtrittsöffnungen einen Durchmesser von etwa 6 bis 12 mm, insbesondere von etwa 8 bis 10 mm auf.

Eine besonders wirksame, jedoch gleichzeitig kostengünstige Herstellung der Schleifschlammpresse ist bei einer Ausführungsform möglich, bei der die Pressplatte von einem Spindelhubgetriebe angetrieben ist. Ein solches Spindelhubgetriebe wird von einem Elektromotor angetrieben und kann die Pressplatte mit einer geringen Geschwindigkeit in den Behälter absenken. Nach einer vorteilhaften Ausführungsform kann die Pressplatte mit einer Geschwindigkeit von etwa 0,1 bis 3 cm pro Minute, insbesondere von etwa 0,5 bis 1,5 cm pro Minute, absenkbar sein. Derartige niedrige Absenkgeschwindigkeiten haben sich in der Praxis als vorteilhaft herausgestellt, um ein unerwünschtes Verstopfen der Durchgangsöffnungen bzw. Durchtrittsöffnungen zu verhindern. Alternativ kann die Pressplatte von einem Hydraulikzylinder angetrieben werden.

Weiterhin kann es vorteilhaft sein, wenn die maximale Presskraft der Pressplatte begrenzt wird. Es hat sich nämlich herausgestellt, dass es besser ist, wenn ein gewisser Restölanteil in dem Schleifschlamm verbleibt, da hierdurch verhindert wird, dass Schleifschlammpartikel unerwünscht in den Ölauffangbehälter austreten bzw. diese Partikel die Durchgangsöffnungen bzw. Durchtrittsöffnungen verstopfen.

Nach einer weiteren vorteilhaften Ausführungsform kann unterhalb des Behälters ein insbesondere als schiefe Ebene ausgebildetes Auffangblech vorgesehen sein. Ein solches Auffangblech dient einerseits dazu, das aus dem Behälter austretende Öl zu sammeln und in den Ölauffangbehälter zu leiten. Andererseits dient ein solches Auffangblech als weiterer Abscheider für verbliebene Restpartikel, die somit nicht in den Ölauffangbehälter gelangen sondern auf der schiefen Ebene zurückbleiben.

Nach einer weiteren vorteilhaften Ausführungsform kann die Pressplatte auf einem Schlitten montiert sein, der über den Behälter bewegbar ist. Auf diese Weise lässt sich der Behälter innerhalb kurzer Zeit und auf einfache Weise wechseln, indem die Pressplatte auf dem Schlitten zur Seite geschoben wird. Nach Austauschen des Behälterinhalts kann anschließend der Schlitten wieder über den Behälter bewegt werden, sodass die Pressplatte wiederum abgesenkt werden kann.

Es ist vorteilhaft, wenn die Größe und Form der Pressplatte im Wesentlichen der Größe und Form der Behälteröffnung entspricht, da in diesem Fall zwischen Pressplatte und Behälterwandung so gut wie kein Schleifschlamm austritt. Für einen guten Wirkungsgrad ist es vorteilhaft, wenn die Pressplatte eine Pressfläche von mindestens DIN A4, insbesondere von mindestens DIN A3 besitzt.

Ferner wird eine Schleifschlammpressenanordnung mit einer erfindungsgemäßen Schleifschlammpresse und einer Entleerungseinrichtung zur Entleerung des Korbeinsatzes angegeben. Die Entleerungseinrichtung umfasst eine, insbesondere an einem Gestell, drehbar gelagerte Haltevorrichtung für den Korbeinsatz. Durch die Entleerungseinrichtung wird eine einfache Entleerung des Korbeinsatzes möglich, welcher beispielsweise zuvor aus dem Behälter der Schleifschlammpresse entfernt wurde.

Bevorzugt weist die Haltevorrichtung einen offenen Behälter für den Korbeinsatz auf. Die Haltevorrichtung kann zwischen einer ersten Position und einer zweiten Position gedreht werden. Dabei weist eine Öffnung des Behälters nach oben, wenn sich die Haltevorrichtung in der ersten Position befindet, um in einfacher Weise den Korbeinsatz in den Behälter einbringen zu können. Ferner weist in der zweiten Position die Behälteröffnung nach unten oder schräg nach unten, sodass der im Behälter angeordnete Korbeinsatz in einfacher Weise entleert werden kann.

Nach einer weiteren erfindungsgemäßen Ausgestaltung ist an der Außenwand des Behälters ein Rahmen angeordnet, an welchem eine Drehachse bildende Achszapfen ausgebildet sind, mittels welchen der Rahmen und damit der Behälter an dem Gestell drehbar gelagert sind.

Nachfolgend wird die vorliegende Erfindung rein beispielhaft anhand einer vorteilhaften Ausführungsform und unter Bezugnahme auf die beigefügten Zeichnungen beschrieben.

Die Figur 1 zeigt eine teilweise geschnittene Seitenansicht einer Schleifschlammpresse.

Die Figur 2 zeigt eine Schleifschlammpressenanordnung mit der Schleifschlammpresse von Figur 1.

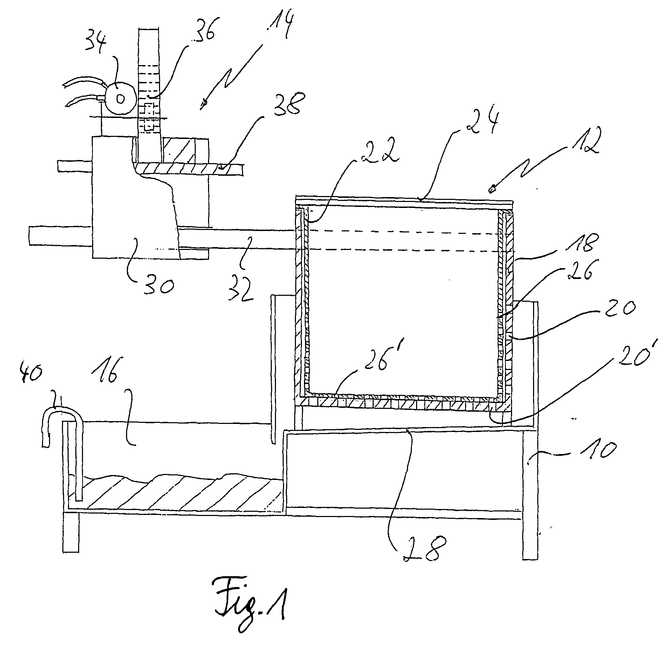

Die Figur 1 zeigt eine Schleifschlammpresse mit einem Grundgestell 10, auf dem eine Aufnahme 12 für Schleifschlamm, eine Presseinrichtung 14 und ein Ölauffangbehälter 16 angeordnet sind. Hierbei ist der Ölauffangbehälter 16 als Wanne ausgebildet, die einstückig mit dem Grundgestell 10 verbunden ist. Oberhalb des Ölauffangbehälters 16 und horizontal dazu versetzt ist die Aufnahme 12 angeordnet, die einen aus Stahl hergestellten Behälter 18 aufweist, der an seiner Oberseite offen ist, und der an seinem Boden mit Durchgangsöffnungen 20' sowie an einem Teil seiner Wandungen mit Durchgangsöffnungen 20 versehen ist. Die Durchgangsöffnungen 20, 20' sind als Bohrungen mit einem Durchmesser von 6 mm in einem regelmäßigen Lochmuster mit einem gegenseitigen Abstand von etwa 20 mm ausgebildet.

In das Innere des Behälters 18 ist ein ebenfalls aus Stahl bestehender Korbeinsatz 22 eingesetzt, der etwa genauso groß wie der Innenraum des Behälters 18 ist und der mit seinem Boden auf dem Boden des Behälters 18 aufliegt. An seiner Oberseite weist der Korbeinsatz 22 zwei U-förmige Schienen 24 auf, in die eine Entnahmeeinrichtung eingeführt werden kann, um den Korbeinsatz 22 mit Hilfe eines Krans oder eines Gabelstaplers aus dem Behälter 18 zu entnehmen.

Der Korbeinsatz 22 ist an seinem Boden mit Durchtrittsöffnungen 26' und an seinen Wandungen mit einer Vielzahl von Durchtrittsöffnungen 26 versehen, die beim dargestellten Ausführungsbeispiel einen geringeren Querschnitt als die Durchgangsöffnungen des Behälters 18 aufweisen. Nach einer weiteren, nicht dargestellten vorteilhaften Ausführungsform können jedoch die Durchtrittsöffnungen 26 des Korbeinsatzes 22 einen größeren Querschnitt als die Durchgangsöffnungen 20 des Behälters 18 aufweisen. Bei dieser Ausführungsform sind dann die Durchtrittsöffnungen mit Bohrungen mit einem Durchmesser von etwa 8 bis 10 mm ausgebildet und ebenfalls in einem gleichmäßigen Lochmuster mit einem gegenseitigen Abstand von etwa 10 mm verteilt angeordnet.

Um aus dem Behälter 18 austretendes Öl zu dem Ölauffangbehälter 16 zu leiten, ist unterhalb des Behälters 18 ein als schiefe Ebene ausgebildetes Auffangblech 28 vorgesehen, das sich in Richtung des Ölauffangbehälters 16 neigt und in diesen mündet.

Wie die Figur 1 ferner zeigt, weist die Presseinrichtung 14 einen Schlitten 30 auf, der auf zwei Schienen 32 in horizontaler Richtung verfahrbar ist. Auf dem Schlitten 30 ist ein von einem Elektromotor 34 angetriebenes Spindelhubgetriebe 36 angeordnet, an dessen Kolben eine Pressplatte 38 aus Stahl befestigt ist. Die Größe und Form der Pressplatte 38 entspricht im Wesentlichen der Größe und Form der Öffnung des Behälters 18. Die Dicke der Pressplatte beträgt etwa 30 mm. Die Fläche der Pressplatte beträgt etwa 750 x 750 mm, wobei die Pressplatte über einen Hub von etwa 500 mm in den Behälter 18 abgesenkt werden kann. Über den Elektromotor 34 ist die Pressplatte mit einer Geschwindigkeit von etwa 1 cm pro Minute absenkbar. Die maximale Presskraft, mit der die Pressplatte in dem Behälter absenkbar ist, kann einstellbar begrenzt werden.

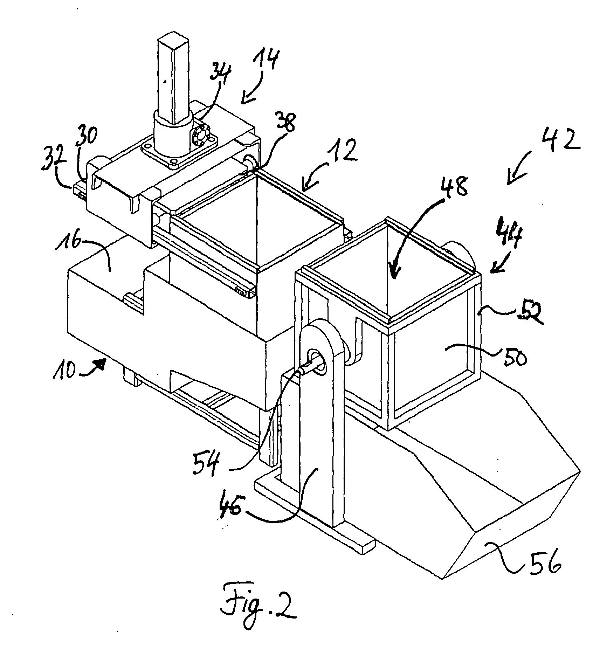

Die Figur 2 zeigt eine Schleifschlammpressenanordnung, welche zusätzlich zu der mit Bezug auf Figur 1 beschriebenen Schleifschlammpresse eine Entleerungseinrichtung 42 zur Entleerung des Korbeinsatzes 22 aufweist. Die Entleerungseinrichtung 42 weist eine Haltevorrichtung 44 für den Korbeinsatz 22 und ein Gestell 46 auf, welches von dem Grundgestell 10 getrennt ist, aber auch als Teil des Grundgestells 10 ausgestaltet sein kann. Die Haltevorrichtung 44 umfasst einen, eine Öffnung 48 aufweisenden Behälter 50, dessen Innenraum in etwa so groß ist wie der Korbeinsatz 22, sodass der Korbeinsatz 22 über die Behälteröffnung 48 in den Behälter 50 eingebracht werden kann.

An der Außenwand des Behälters 50 ist ein Rahmen 52 angeordnet, welcher den Behälter 50 umgibt und an dem Achszapfen 54 ausgebildet sind, mittels denen der Rahmen 52 und damit auch der Behälter 50 an dem Gestell 46 drehbar gelagert sind. Der Behälter 50 kann insbesondere aus der in Figur 2 gezeigten Position, in der die Behälteröffnung 48 nach oben weist, in eine Position gedreht werden, in der die Behälteröffnung 48 nach unten oder schräg nach unten weist und insbesondere einem unterhalb des Behälters 50 angeordneten Container 56 zugewandt ist, wodurch eine einfache Entleerung des Korbeinsatzes 22 möglich wird.

Nachfolgend wird die Funktionsweise der vorstehend beschriebenen Schleifschlammpresse beschrieben.

In dem in der Figur 1 dargestellten Zustand ist der Behälter 18 an seiner Oberseite zugänglich, sodass der in dem Behälter 18 befindliche Korbeinsatz 22 von oben mit Schleifschlamm befüllt werden kann. Anschließend wird der Schlitten 30 manuell oder mit Hilfe eines (nicht dargestellten) Antriebs auf den Schienen 32 in horizontaler Richtung so weit verschoben, bis sich die Pressplatte 38 über der Behälteröffnung befindet. Anschließend wird mit Hilfe des Elektromotors 34 das Spindelhubgetriebe 36 angetrieben, sodass sich die Pressplatte 38 in das Innere des Behälters 18 bzw. des Korbeinsatzes 22 absenkt. Hierbei wird der in dem Korbeinsatz 22 befindliche Schleifschlamm verdichtet, wobei das in dem Schleifschlamm befindliche Restöl durch die Durchtrittsöffnungen 26, 26' und die Durchgangsöffnungen 20 und 20' ausgepresst wird. Das Öl trifft dann auf das Auffangblech 28 auf und rinnt auf diesem in den Ölauffangbehälter 16, wobei etwaige Partikelreste, die aus dem Behälter 18 ausgetreten sind, auf dem Auffangblech 28 zurückbleiben. Über eine Rohrleitung 40 kann dann das rückgewonnene Öl aus dem Ölauffangbehälter 16 abgesaugt werden, wobei hierzu eine (nicht dargestellte) Schwimmersteuerung vorgesehen sein kann, welche eine Ölpumpe betätigt. Bevorzugt ist die Rohrleitung 40 nicht bis an den Boden des Ölauffangbehälters 16 geführt, sodass sich auf diesem nochmals etwaige Schlammpartikel absondern können.

Nachdem der in dem Korbeinsatz 22 befindliche Schleifschlamm bis zu einem gewünschten Anteil, beispielsweise 70 %, ausgepresst worden ist, wird die Pressplatte 38 wieder angehoben und der Schlitten 30 wird in die in der Figur dargestellte Position verfahren. Anschließend kann mit Hilfe einer Entnahmevorrichtung, die in die Schienen 24 eingeführt wird, der Korbeinsatz 22 aus dem Behälter 18 entnommen werden, beispielsweise mit Hilfe eines Krans oder Gabelstaplers, sodass der verbliebene Restschlamm entsorgt werden kann. Nach einer Reinigung des Behälters 18 sowie des Korbeinsatzes 22 kann ein neuerlicher Zyklus beginnen.

Mit Bezug auf Figur 2 wird näher ausgeführt, dass der aus dem Behälter 18 entnommene Korbeinsatz 22, beispielsweise mit Hilfe des Krans oder Gabelstaplers, in die nach oben weisende Behälteröffnung 48 eingesetzt wird. Vorzugsweise wird der Korbeinsatz 22 am Behälter 50 lösbar fixiert, sodass der Behälter 50 aus der in Figur 2 gezeigten Position um die von den Achszapfen 54 gebildete Drehachse, vorzugsweise mittels eines nicht gezeigten Elektromotors, um einen Winkel zwischen 90 Grad und 270 Grad gedreht werden kann, ohne das der Korbeinsatz aus dem Behälter fällt. Nach der Drehung weist die Behälteröffnung 48 nach unten oder zumindest schräg nach unten, so dass der Inhalt des Korbeinsatzes 22 in den unterhalb des Behälters 50 angeordneten Container 56 entleert werden kann.

### Bezugszeichenliste

- 12: Aufnahme
- 14: Presseinrichtung
- 16: Ölauffangbehälter
- 18: Behälter
- 20, 20': Durchgangsöffnungen
- 22: Korbeinsatz
- 24: Schienen
- 26, 26': Durchtrittsöffnungen
- 28: Auffangblech
- 30: Schlitten
- 32: Schienen
- 34: Elektromotor
- 36: Spindelhubgetriebe
- 38: Pressplatte
- 40: Rohrleitung
- 42: Entleerungseinrichtung
- 44: Haltevorrichtung
- 46: Gestell
- 48: Öffnung
- 50: Behälter
- 52: Rahmen
- 54: Achszapfen
- 56: Container

## Patentansprüche

1. Schleifschlammpresse, umfassend eine Aufnahme (12) für den Schleifschlamm, eine Presseinrichtung (14) und einen Ölauffangbehälter (16),
wobei die Aufnahme (12) ein mit Durchgangsöffnungen (20, 20') versehener, oben offener Behälter (18) ist, und
wobei die Presseinrichtung (14) eine Pressplatte (38) aufweist, die in den Behälter (18) absenkbar ist,
**dadurch gekennzeichnet, dass**
in den Behälter (18) ein Korbeinsatz (22) eingesetzt ist, der mit Durchtrittsöffnungen (26, 26') versehen ist.

2. Schleifschlammpresse nach Anspruch 1,
**dadurch gekennzeichnet, dass**
der Behälter (18) an seiner Wandung eine Vielzahl von Durchgangsöffnungen (20) aufweist.

3. Schleifschlammpresse nach Anspruch 1 oder 2,
**dadurch gekennzeichnet, dass**
der Behälter (18) an seinem Boden eine Vielzahl von Durchgangsöffnungen (20') aufweist.

4. Schleifschlammpresse nach zumindest einem der vorstehenden Ansprüche 2 oder 3,
**dadurch gekennzeichnet, dass**
die Durchgangsöffnungen (20, 20') einen Durchmesser von etwa 4 - 8 mm, insbesondere von etwa 5 - 7 mm aufweisen.

5. Schleifschlammpresse nach zumindest einem der vorstehenden Ansprüche,
**dadurch gekennzeichnet, dass**
die Durchgangsöffnungen (20, 20') einen kleineren Querschnitt als die Durchtrittsöffnungen (22, 22') aufweisen.

6. Schleifschlammpresse nach zumindest einem der vorstehenden Ansprüche,
**dadurch gekennzeichnet, dass**
die Durchtrittsöffnungen (22, 22') einen Durchmesser von etwa 6 - 12 mm, insbesondere von etwa 8 - 10 mm aufweisen.

7. Schleifschlammpresse nach zumindest einem der vorstehenden Ansprüche,
**dadurch gekennzeichnet, dass**
die Pressplatte (38) von einem Spindelhubgetriebe (36) angetrieben ist.

8. Schleifschlammpresse nach zumindest einem der vorstehenden Ansprüche,
**dadurch gekennzeichnet, dass**
die Pressplatte (38) auf einem Schlitten (30) montiert ist, der über den Behälter (18) bewegbar ist.

9. Schleifschlammpresse nach zumindest einem der vorstehenden Ansprüche,
**dadurch gekennzeichnet, dass**
die Größe und Form der Pressplatte (38) im Wesentlichen der Größe und Form der Behälteröffnung entspricht.

10. Schleifschlammpresse nach zumindest einem der vorstehenden Ansprüche,
**dadurch gekennzeichnet, dass**
die Pressplatte (38) eine Pressfläche von mindestens DIN A4, insbesondere von mindestens DIN A3 besitzt.

11. Schleifschlammpresse nach zumindest einem der vorstehenden Ansprüche,
**dadurch gekennzeichnet, dass**
die Pressplatte (38) mit einer Geschwindigkeit von etwa 0,1 bis 3 cm/min, insbesondere etwa 0,5 bis 1,5 cm/min absenkbar ist.

12. Schleifschlammpresse nach zumindest einem der vorstehenden Ansprüche,
**dadurch gekennzeichnet, dass**
unterhalb des Behälters (18) ein insbesondere als schiefe Ebene ausgebildetes Auffangblech (28) vorgesehen ist.

13. Schleifschlammpressenanordnung mit einer Schleifschlammpresse nach zumindest einem der vorstehenden Ansprüche und
mit einer Entleerungseinrichtung (42) zur Entleerung des Korbeinsatzes (22), welche eine, vorzugsweise an einem Gestell (46), drehbar gelagerte Haltevorrichtung (44) für den Korbeinsatz (22) aufweist.

14. Anordnung nach Anspruch 13,
**dadurch gekennzeichnet, dass**
die Haltevorrichtung (44) einen offenen Behälter (50) für den Korbeinsatz (22) aufweist, dass die Haltevorrichtung (44) zumindest zwischen einer ersten Position, in welcher eine Behälteröffnung (48) nach oben weist, und einer zweiten Position drehbar ist, in welcher die Behälteröffnung (48) nach unten oder schräg nach unten weist.

15. Anordnung nach Anspruch 14,
**dadurch gekennzeichnet, dass**
ein Rahmen (52) an der Außenwand des Behälters (50) angeordnet ist, und dass eine Drehachse bildende Achszapfen (54) an dem Rahmen (52) ausgebildet sind, welche in dem Gestell (46) gelagert sind.
